# EUROPÄISCHE PATENTSCHRIFT

(11) **EP 2 381 793 B1**
(45) Veröffentlichungstag und Bekanntmachung des Hinweises auf die Patenterteilung: **17.07.2013**
(21) Anmeldenummer: 10704084.2
(22) Anmeldetag: 11.01.2010
(51) Int. Cl.: A23C 3/037, A23L 3/16, A23L 3/18, B01F 5/20, B01F 3/04

(54) **INFUSIONSSYSTEM FÜR EIN FLÜSSIGES LEBENSMITTELPRODUKT UND VERFAHREN ZUR DIREKTEN ERWÄRMUNG EINES FLÜSSIGEN LEBENSMITTELPRODUKTES IN EINEM INFUSIONSSYSTEM**
INFUSION SYSTEM FOR A LIQUID FOOD PRODUCT AND METHOD FOR DIRECTLY HEATING A LIQUID FOOD PRODUCT IN AN INFUSION SYSTEM
SYSTEME DE PERFUSION POUR UN PRODUIT ALIMENTAIRE LIQUIDE ET PROCEDE VISANT A CHAUFFER DIRECTEMENT UN PRODUIT ALIMENTAIRE LIQUIDE DANS UN SYSTEME DE PERFUSION

(30) Priorität: 27.01.2009 DE 102009006248
(43) Veröffentlichungstag der Anmeldung: 02.11.2011
(73) Patentinhaber: GEA TDS GmbH, 31157 Sarstedt (DE)
(72) Erfinder: KJAERBYE, Henrik, Dina Complex Villa 9 AL Bida (KW); KOWALIK, Gottfried, 48712 Gescher (DE); TACKE, Ludger, 46342 Velen (DE); SCHWENZOW, Uwe, 48683 Ahaus (DE); DRECKMANN, Reinhold, 48249 Dülmen (DE)
(86) Internationale Anmeldenummer: PCT/EP2010/000080
(87) Internationale Veröffentlichungsnummer: WO 2010/086082

(56) Entgegenhaltungen:
- WO-A1-00/25596
- WO-A1-02/060281
- WO-A1-03/103418
- WO-A1-2004/071221
- DE-A1- 2 351 413
- GB-A- 1 475 771
- NB FREY: "Unit process energy requirements for steam infusion UHT milk processing" TRANSACTIONS OF THE AMERICAN SOCIETY OF AGRICULTURAL ENGINEERS, AMERICAN SOCIETY OF AGRICULTURAL ENGINEERS. ST.JOSEPH, MI, US, Bd. 27, Nr. 6, 1. Januar 1984 (1984-01-01) , Seiten 1956-1959, XP002085471 ISSN: 0001-2351

## Beschreibung

### TECHNISCHES GEBIET

Die Erfindung betrifft ein Infusionssystem für ein flüssiges, zu erwärmendes Lebensmittelprodukt, insbesondere ein Molkereiprodukt wie Milch, Sahne oder Joghurt, das eine von einem Infusorbehälter mit einem sich nach unten verjüngenden konischen Boden begrenzte Infusionskammer mit einem Produkt-Einlass für das zu erwärmende Lebensmittelprodukt in ihrem oberen Bereich und mit einem Produkt-Auslass für das erwärmte Lebensmittelprodukt in ihrem unteren Bereich beinhaltet und das einen Dampf-Einlass für das Heizmedium Dampf in dem oberen Bereich aufweist. Darüber hinaus betrifft die Erfindung ein Verfahren zur direkten Erwärmung eines flüssigen, zu erwärmenden Lebensmittelproduktes der vorg. Art in einem Infusionssystem mit dem vorbeschriebenen grundsätzlichen Aufbau mittels eines Heizmediums Dampf sowie die Verwendung des vorg. Infusionssystems bei einer Prozessanlage zur Herstellung unter anderem einer UHT-Milch (Ultrahochtemperatur-Milch) oder ESL-Milch (Extended shelf life-Milch).

### STAND DER TECHNIK

Die Wärmebehandlung von Lebensmittelprodukten zur Verlängerung der Lagerbeständigkeit ist ein bekanntes und häufig angewendetes Verfahren. Bei den Lebensmittelprodukten kann es sich beispielsweise um Molkereiprodukte, wie z.B. Milch, Sahne oder Joghurt, handeln. Die Wärmebehandlung mittels des Heizmediums Dampf (in der Regel Wasserdampf in überhitztem Zustand) kann mit den unterschiedlichsten Verfahren, entweder direkt oder indirekt, erfolgen ([1], Heinz-Gerhard KESSLER, Lebensmittel-Verfahrenstechnik, Schwerpunkt Molkereitechnologie, 1. Auflage, München - Weihenstephan, Verlag A. Kessler, 1976, S. 154 bis 159). Zu den indirekten Verfahren zählt beispielsweise das Erwärmen unter Verwendung verschiedener Wärmetauscherausführungen (Rohrbündel-Wärmeaustauscher; Platten-Wärmeaustauscher). Die direkten Verfahren umfassen zwei Hauptgruppen, nämlich das Injektionsverfahren mittels Dampf ([1], S. 154,155) und das Infusionsverfahren mittels Dampf ([1], S. 156).

Durch den unmittelbaren Wärmeaustausch zwischen dem Dampf und dem flüssigen Lebensmittelprodukt wird dieses unmittelbar, schnell und effizient erwärmt. Infolge dieses schnellen Verfahrens kann die Behandlungszeit verringert werden, was insgesamt zu einer verringerten Wärmeeinwirkung auf das Lebensmittelprodukt führt und wodurch ein Lebensmittelprodukt erhalten wird, das vor allem im Hinblick auf den Geschmack ein höheres Qualitätsniveau behält. Die schnelle und schonende Wärmebehandlung beim direkten Erwärmungsverfahren wird um den Preis eines höheren Energieaufwandes gegenüber dem indirekten Erwärmungs**v**erfahren erkauft. Daher ist man bestrebt, die Wärmeübergangsbedingungen beim direkten Verfahren der in Rede stehenden Art weiter zu verbessern, was dann zwangsläufig zu einer geringeren erforderlichen Temperaturdifferenz zwischen dampfförmigem Wärmeträger und dem zu erwärmenden Lebensmittelprodukt führt und damit die schonende Behandlung desselben weiter begünstigt.

Beim Injektionsverfahren wird das zu erwärmende Lebensmittelprodukt durch einen Injektor gefördert. Der Dampf wird mit einem höheren Druck zum Zwecke der Erhitzung direkt in das Lebensmittelprodukt injiziert und der Wärmeaustausch vollendet sich in einem sog. Mischraum (DE 10 2007 017 704 A1).

Beim Infusionsverfahren, bei dem die Infusionserwärmung zur Anwendung kommt, wird das feinverteilte Lebensmittelprodukt in einer Dampfkammer erwärmt. Der Dampf- und der Produktsystemdruck sind bei diesem Verfahren nahezu identisch. Damit ist die Temperaturdifferenz zwischen dem Erhitzungsmedium und dem Lebensmittelprodukt deutlich geringer als beim Injektionsverfahren, mit der Folge einer schonenderen Produktbehandlung. Die Nachteile des Infusions- im Vergleich zum Injektionsverfahren bestehen in einer komplizierteren Verfahrenstechnik und in höheren Investitionskosten. Einen Überblick über Verfahrenskonzepte zur Sterilisierung von Lebensmittelprodukten, insbesondere auch unter Berücksichtigung direkter Erhitzungsverfahren der vorbeschriebenen Art, geben Saskia **SCHWERMANN,** Uwe **SCHWENZOW** in "Verfahrenskonzepte zur Herstellung von ESL-Milch", Beitrag in drei Abschnitten in Deutsche Milchwirtschaft, 11/2008 bis 13/2008 (59. Jg.). Mit Blick auf das Infusionsprinzip wird in Abb. 4 dieser Veröffentlichung allerdings lediglich ein Infusorbehälter offenbart, bei dem Dampf und das zu erwärmende Lebensmittelprodukt im oberen Bereich des Behälters zu- und das erwärmte Lebensmittelprodukt am unteren Ende des konischen Bodens des Behälters abgeführt werden.

Die Druckschrift DK 169 248 B1 offenbart eine Anlage für das Sterilisieren von Milch. Eine solche Anlage ist als Direkt-UHT-Anlage (Direkt-Ultrahochtemperatur-Anlage) bekannt. Bei diesen Anlagen wird die Milch, die einer sog. Infusionskammer zugeführt wird, in einer solchen Weise in eine Dampfatmosphäre eingeleitet, dass die Milch auf eine Temperatur von ungefähr 140 Grad Celsius erhitzt wird. Die vorg. Infusionskammer entspricht hinsichtlich ihrer gattungsbildenden Merkmale einer Infusionskammer des gattungsgemäßen Infusionssystems, wie es Gegenstand der vorliegenden Erfindung ist.

Wesentliche Kennzeichen der vorg. bekannten Infusionskammer bestehen darin, dass die zu erwärmende Milch einem die Infusionskammer begrenzenden, mit einem konischen Boden versehenen Infusorbehälter im zentralen Kopfbereich über eine Vielzahl von Öffnungen zugeführt wird. Darüber hinaus soll die dergestalt in feinen Tröpfen verteilte Milch in einer Atmosphäre von unter Druck stehendem Dampf frei fallen (sog. Fallstrom), ohne nach Möglichkeit während des Erhitzungsprozesses - dies ist die Wunschvorstellung - auf ihrem Weg zum Ablauf im konischen Boden irgendeine Oberfläche zu berühren. Der Dampf wird im Kopfbereich des Behälters über einen durch eine Vielzahl von Öffnungen perforierten Gehäusemantel zugeführt, d.h. der Dampf tritt, in radialer Richtung gesehen, von außen an den zentralen Produktstrahl heran.

Im Stand der Technik sind weitere Infusorbehälter für die in Rede stehenden Anwendungen bekannt geworden, die alle nach dem vorstehend kurz umrissenen grundsätzlichen Prinzip arbeiten, wobei die Zerteilung, Verteilung und Zuführung des zu erwärmenden Produkts im Kopfbereich des Behälters zum Einen und die Zufuhr des Dampfes gleichfalls im Kopfbereich des Behälters zum Anderen konstruktiv unterschiedlich ausgeprägt sind. Stellvertretend für diese beim Infusionsverfahren vorherrschende Bauweise seien nachfolgend die Infusorbehälter gemäß EP 0 650 332 B1 und EP 1 536 702 B1 kurz umrissen.

In der EP 0 650 332 B1 ist eine Fallstromheizeinrichtung beschrieben, bei der die zu erwärmende Flüssigkeit einer Druckkammer zentral von oben über einen in diese ein Stück weit hineinreichenden Flüssigkeitszufuhrkanal zugeführt und über eine mit einer Anzahl von Plattenkanälen versehene Zufuhrplatte in Form von Flüssigkeitsstrahlen ausgebracht wird. Der Dampf wird in den Kopfraum der Druckkammer oberhalb der Austragungsstelle für die Flüssigkeit seitlich eingespeist und konzentrisch um diese Austragungsstelle herum über eine mit einer Vielzahl von Öffnungen versehene Dampfverteilungsplatte der sich unterhalb fortsetzenden Druckkammer von oben nach unten zugeführt.

Aus der EP 1 536 702 B1, die aus der WO 03/103418 A1 hervorgegangen ist, ist eine Vorrichtung für eine Brüheinrichtung für ein flüssiges Lebensmittelprodukt bekannt, die einen einen konischen Boden aufweisenden Druckbehälter mit einem Einlass für das Lebensmittelprodukt in seinem oberen Bereich und mit einem Auslass für das Lebensmittelprodukt in seinem unteren Bereich beinhaltet. Dabei ist der Produkteinlass so vorgesehen, dass das in den zentralen Kopfbereich des Druckbehälters eintretende Lebensmittelprodukt in kleine Tröpfchen aufgeteilt wird und als Fallstrom den Behälter frei durchfällt. Die Brüheinrichtung beinhaltet weiterhin einen Einlass für Dampf, der so vorgesehen ist, dass Dampf durch eine den Behältermantel konzentrisch umschließende Verteilerkammer in den oberen Bereich des Druckbehälters eintritt. Die Verteilerkammer ist durch die Behälterwand, eine Führungsplatte und mindestens eine gelochte Platte in der Weise definiert, dass der Dampfeintritt in den Druckbehälter ein Stück weit unterhalb des Produkteinlasses erfolgt, und zwar derart, dass er als ringförmige Strömung, die Behälterwand tangierend, nach unten gelenkt wird und eine Geschwindigkeit von < 2 m/s aufweist.

Es hat sich beim Betrieb der vorstehend beschriebenen Infusorbehälter gezeigt, dass das zu erwärmende Lebensmittelprodukt immer eine mehr oder weniger große Affinität zum Dampf hin aufweist. Da der Dampf den zentralen Produktstrahl von außen umschließt und beaufschlagt, besteht bei letzterem die grundsätzliche Neigung, sich radial nach außen auszudehnen. Dadurch ist es schwierig, den Produktstrahl zentrisch bis in den konischen Bodenteil zu führen, ohne dass zylindrische Wandbereiche im mittleren und unteren Teil des Behälters berührt oder tangiert werden. Eine Berührung der Wandbereiche durch das Lebensmittelprodukt kann zu unerwünschten Ablagerungen und Anbrennungen führen. Sofern das zu erwärmende Lebensmittelprodukt faserige oder stückige Bestandteile enthält, führt die Berührung eines diesbezüglichen Lebensmittelproduktes mit den Innenwandungen des Behälters u.U. zu unerwünschten Ausfällungen dieser Bestandteile. Um Ablagerungen, Anbrennungen oder Ausfällungen entgegenzuwirken, wird meist bereits der zylindrische untere Bereich des Infusorbehälters gekühlt.

Es ist Aufgabe der vorliegenden Erfindung, bei einem Infusionssystem der gattungsgemäßen Art eine zentrale Führung und Bündelung des in der Infusionskammer ausgebrachten Strahls des Lebensmittelprodukts zu erreichen, die Gefahr der Ablagerung und des Anbrennens von Lebensmittelprodukt an den Wandungen des Infusorbehälters und die Neigung der Ausfällung von festen Bestandteilen des zu erwärmenden Lebensmittelprodukts wie Fasern oder Stücke zu vermindern sowie eine leichte Anpassbarkeit an unterschiedliche Lebensmittelprodukte und gewünschte Betriebsbedingungen wie z. B. Durchsatzmenge, Erwärmungsdauer, maximale Erwärmungstemperatur und Ähnliches sicherzustellen. Darüber hinaus ist es Ziel der Erfindung, ein Verfahren zur direkten Erwärmung eines flüssigen Lebensmittelproduktes in einem Infusionssystem anzugeben.

### ZUSAMMENFASSUNG DER ERFINDUNG

Diese Aufgabe wird durch ein Infusionssystem mit den Merkmalen des Anspruchs 1 gelöst. Vorteilhafte Ausführungsformen des Infusionssystems sind Gegenstand der der sich anschließenden Unteransprüche. Ein Verfahren zur direkten Erwärmung eines flüssigen Lebensmittelproduktes in einem Infusionssystem ist Gegenstand des Nebenanspruchs 17. Vorteilhafte Ausgestaltungen des Verfahrens sind Gegenstand der sich dem Nebenanspruch anschließenden Unteransprüche.

Bevorzugte Verwendungen des Infusionssystems sind Gegenstand der Unteransprüche 23 bis 25.

Der erste erfinderische Grundgedanke besteht im Gegensatz zu bekannten Lösungen, wie sie vorstehend kurz umrissen wurden, darin, den Dampf über zwei örtlich und strömungstechnisch voneinander getrennte Dampf-Einlässe zuzuführen und die beiden dadurch generierten getrennten Dampfströme von zwei Seiten an das feinverteilte Lebensmittelprodukt, das eine Infusionskammer als Fallströmung durchsetzt, heranzutragen. Die beiden getrennten Dampfströme, ein erster Dampf und ein zweiter Dampf, lassen sich hinsichtlich ihrer Menge separat steuern. Durch das steuerbare Mengenverhältnis beider Dampfströme ist damit auch der jeweils zugeordnete Wärmeeintrag in das Lebensmittelprodukt steuerbar.

Der zweite erfinderische Grundgedanke besteht, wiederum im Gegensatz zu bekannten Lösungen, darin, das Heizmedium erster Dampf zentral, vorzugsweise konzentrisch, im oberen Bereich des Infusorbehälters einzuleiten und diesen ersten Dampf in Form eines sich von oben nach unten gerichteten Freistrahls ausbreiten zu lassen. Der erste Dampf wird erfindungsgemäß über einen ersten Dampf-Einlass einem zweiten Kanal zugeführt, der im Zentrum des oberen Bereichs in die von dem Infusorbehälter begrenzte Infusionskammer, vorzugsweise konzentrisch und in Richtung deren Längsachse, einmündet. Nach den strömungsphysikalischen Gesetzmäßigkeiten breitet sich der vorg. freie Dampfstrahl geradlinig aus und es kommt zu einer Vermischung mit seiner Umgebung ([2], Bruno ECK, Technische Strömungslehre, 7. Auflage, Berlin/Heidelberg/New York, Springer-Verlag, 1966, S. 151 bis 155).

Der dritte erfinderische Grundgedanke besteht nun darin, ebenfalls im Gegensatz zu bekannten Lösungen, das zu erwärmende Lebensmittelprodukt erfindungsgemäß über den Produkt-Einlass einem ersten Kanal zuzuleiten, der den zweiten Kanal ringförmig, vorzugsweise konzentrisch, umschließt und gleichfalls im oberen Bereich und von oben in die Infusionskammer einmündet.

Die Vermischung des zentralen freien Dampfstrahles mit seiner Umgebung vollzieht sich nach den strömungsphysikalischen Gesetzmäßigkeiten dergestalt, dass die feinverteilten Teilchen des Lebensmittelprodukts von außen nach innen mitgerissen werden (siehe [2], S. 151 bis 155) und der ringförmige Strahl des Lebensmittelprodukts dadurch im Wesentlichen zentral gebündelt bleibt und daher die Wand des Infusorbehälters im Sinne der Aufgabenstellung nicht berührt.

Der vierte erfinderische Grundgedanke besteht darin, dass der ringförmige Strahl des Lebensmittelprodukts, in radialer Richtung gesehen, zusätzlich von außen, vorzugsweise konzentrisch, mit dem zweiten Dampf beaufschlagt wird. Diese, für sich gesehen, an sich bekannte Beaufschlagung der Produktteilchen erfolgt erfindungsgemäß dadurch, dass der zweite Dampf über einen zweiten Dampf-Einlass einer Vielzahl von Eintrittsöffnungen zugeführt wird, die ringförmig angeordnet sind, die den ersten Kanal und somit den ringförmigen Strahl des Lebensmittelprodukts radial außenseits umschließen und die gleichfalls im oberen Bereich und von oben in die Infusionskammer einmünden. Der von außen zugeführte zweite Dampf stellt in hohem Maße sicher, dass ggf. radial nach außen abdriftendes Lebensmittelprodukt vor allem von der Wandung der Infusorkammer im mittleren und unteren Bereich fenrgehalten werden und dort nicht anbrennen.

Im Regelfall überwiegt der Wärmeeintrag in den Strahl des Lebensmittelprodukts durch den ersten Dampf von innen, wobei durch das steuerbare Mengenverhältnis zwischen erstem und zweitem Dampf auch das Verhältnis der Wärmeeinträge in den vorg. Strahl zwischen innen und außen in einem weiten Bereich steuerbar ist. So hat es sich gezeigt, dass das erfindungsgemäße Infusorsystem ein Verhältnis der Wärmeeinträge zwischen innen und außen von 80 : 20 bis 50 : 50 (jeweils in Prozent) realisieren kann. Die Wahl des optimalen Verhältnisses ist, wie sich gezeigt hat, produktabhängig und es wird empirisch bestimmt, wobei das Verhältnis sehr einfach über den jeweiligen Druck des ersten und des zweiten Dampfes oder über die Druckdifferenz zwischen dem Druck des ersten und des zweiten Dampfes steuerbar ist.

Eine besonders wirksame Einleitung des zweiten Dampfes über die Eintrittsöffnungen und dadurch besonders zielführende Beaufschlagung des zu erwärmenden Lebensmittelproduktes wird erreicht, wenn die Eintrittsöffnungen Form eines ersten Kranzes Eintrittsöffnungen und eines zweiten Kranzes Eintrittsöffnungen ausgebildet sind, und wenn der erste Kranz Eintrittsöffnungen den zweiten Kranz Eintrittsöffnungen radial außenseits, vorzugsweise konzentrisch, umschließt.

Beste Ergebnisse mit Blick auf die Verhinderung der Beaufschlagung der Wandung des Infusorbehälters durch das Lebensmittelprodukt werden nach einem weiteren Vorschlag dadurch erzielt, dass der erste und der zweite Kranz Eintrittsöffnungen unmittelbar im Wandungsbereich einer vorzugsweise zur Längsachse konzentrischen oberen Behälteröffnung ausmünden, durch die sich der obere Bereich nach oben zum ersten Kanal und zweiten Kanal hin öffnet.

Eine besonders günstige Eindringung des zweiten Dampfes in das zu erwärmende Lebensmittelprodukt wird dadurch erreicht, dass der erste Kranz Eintrittsöffnungen parallel zur Längsachse der oberen Behälteröffnung und der zweite Kranz Eintrittsöffnungen nach unten zu dieser Längsachse hin geneigt orientiert sind.

Es hat sich als vorteilhaft herausgestellt, wie dies ebenfalls vorgeschlagen wird, wenn der das Lebensmittelprodukt zuführende erste Kanal im oberen Bereich der Infusorkammer eine erste Einmündungsstelle, der den Dampf zuführende zweite Kanal im oberen Bereich eine zweite Einmündungsstelle und die Eintrittsöffnungen eine dritte Einmündungsstelle besitzen, wenn die erste und die zweite Einmündungsstelle annähernd auf gleicher Höhe angeordnet sind und wenn die erste Einmündungsstelle oberhalb der zweiten Einmündungsstelle vorgesehen ist.

Eine leichte Anpassbarkeit des erfindungsgemäßen Infusionssystems an gewünschte Betriebsbedingungen wie z. B. Durchsatzmenge, Erwärmungsdauer, maximale Erwärmungstemperatur und Ähnliches wird dadurch sichergestellt, wie dies ein weiterer Vorschlag vorsieht, dass der erste Kanal an seiner tröpfchen- oder filmströmungsbildenden ersten Einmündungsstelle in den oberen Bereich einen veränderlichen Durchtrittsquerschnitt aufweist, wobei dieser in einer jeweils bevorzugten Ausführungsform stufenlos oder in Stufen veränderbar ist.

Eine besonders vorteilhafte Ausführungsform ermöglicht auf relativ einfache Weise die Ausbildung eines in seinem Durchtrittsquerschnitt stufenlos veränderlichen Ringspaltquerschnittes zur Generierung einer ringförmigen, in sich geschlossenen Filmströmung des in die Infusionskammer auszubringenden und zu erwärmenden Lebensmittelprodukts. Dies wir dadurch erreicht, dass der Durchtrittsquerschnitt die Form eines Ringspaltquerschnittes besitzt, der zwischen einer Bohrung in einem den oberen Bereich der Infusionskammer begrenzenden Kopfgegenfiansch und einem die Bohrung durchdringenden, vorzugsweise konischen unteren Körperteil gebildet ist, wobei letzterer in den oberen Bereich hineingreift, sich dorthin radial außenseits verjüngt und einen endseitigen Teil eines inneren Gehäusekörpers bildet, der von außerhalb des Infusorbehälters in dessen Längsachse axial verschieblich ist. Besonders günstige Strömungsbedingungen werden in dem Ringspaltquerschnitt nach einer bevorzugten Ausgestaltung dadurch geschaffen, dass die Bohrung als konvergierende Düse ausgebildet ist, wobei diese düsenförmige Bohrung bevorzugt in einer separaten Düsenplatte angeordnet ist, die im Kopfgegenflansch form- und kraftschlüssig Aufnahme findet.

Es vereinfacht die Anordnung, wenn der an seiner mantelseitigen Außenfläche den ersten Kanal innenseits begrenzende innere Gehäusekörper radial innenseits den zweiten Kanal aufnimmt, der über mehrere über den Umfang des inneren Gehäusekörpers verteilt angeordnete Zulauföffnungen eine Verbindung zur umfangsseitigen Umgebung des inneren Gehäusekörpers aufweist.

Günstige Strömungsbedingungen für den aus dem zweiten Kanal austretenden Strahl des ersten Dampfes und ein kleiner Austrittswiderstand und damit ein kleiner Austrittsverlust ergeben sich dadurch, dass sich der zweite Kanal an seiner Austrittsstelle im unteren Körperteil diffusorartig erweitert, und dass die diffusorartige Innenkontur und eine sich nach unten verjüngende Mantelfläche des unteren Körperteils endseitig eine schneidenförmige Umlaufkante ausbilden.

Die Erfindung schlägt weiterhin einen Infusorkopf vor, dem das zu erwärmende Lebensmittelprodukt und das Heizmedium Dampf zugeführt werden, der diese Fluide in den ersten bzw. zweiten Kanal und die Eintrittsöffnungen verteilt und von dort in den oberen Bereich des Infusorbehälters ausbringt und mit dem der Durchtrittsquerschnitt des ersten Kanals im Bereich seines austrittsseitigen Ringspaltquerschnittes stufenlos veränderlich ist. Dies gelingt dadurch, dass ein obenseits am Kopfgegenflansch angeordneter Infusorkopf vorgesehen ist, der aus einem dem Kopfgegenflansch benachbarten Produktgehäuse und einem sich diesem anschließenden Dampfgehäuse besteht. Das Produktgehäuse und das Dampfgehäuse sind von dem inneren Gehäusekörper, vorzugsweise konzentrisch, in Richtung der Längsachse verschieblich, abgedichtet durchdrungen. Ein mittlerer und der untere Körperteil des inneren Gehäusekörpers bilden mit dem Produktgehäuse eine ringförmige Produktkammer mit dem Produkt-Einlass und der mittlere und ein oberer Körperteil sowie eine sich an letzteren anschließende Verstellstange des inneren Gehäusekörpers bilden mit dem Dampfgehäuse eine ringförmige Dampfkammer mit dem ersten Dampf-Einlass.

Die Erfindung schlägt weiterhin im Rahmen einer zweiten Ausführungsform des Infusorbehälters eine das erwärmte Lebensmittelprodukt in das Zentrum des unteren Bereichs der Infusionskammer zusammenführende und von dort unter günstigen Auslaufbedingungen nach unten in die Umgebung abführende Fangeinrichtung vor. Zu diesem Zweck ist diese Fangeinrichtung im unteren Bereich angeordnet, sie besteht wenigstens aus einem Fangtrichter, dessen konisch sich nach unten verjüngender Einlaufmantel in einen nach unten offenen Ablaufkanal ausmündet. Der Ablaufkanal fluchtet mit einem in einem Auslassrohr angeordneten Auslasskanal, wobei sich das Auslassrohr an seinem oberen Ende an den Boden anschließt und an seinem unteren Ende in den Produkt-Auslass übergeht.

Um Ablagerungen und Anbrennungen des erwärmten Lebensmittelproduktes zu verhindern oder wenigstens zu minimieren, sieht eine vorteilhafte Ausgestaltung des Infusionssystems gemäß der Erfindung vor, dass wenigstens der Boden des Infusorbehälters doppelwandig ausgeführt und zwischen den beiden Wandungen ein mit Kühlmittel beaufschlagbarer Kühlmittelraum vorgesehen ist. Es hat sich weiterhin in vielen Anwendungsfällen als vorteilhaft erwiesen, wenn zusätzlich der untere Teil des mittleren Bereichs des Infusorbehälters doppelwandig ausgeführt ist und wenn sich der Kühlmittelraum zwischen den beiden Wandungen fortsetzt.

In einer bevorzugten Ausführungsform erstreckt sich der Kühlmittelraum auch über den Umfang und die gesamte axiale Länge des Auslassrohres bis zum Produkt-Auslass hin.

Die Erfindung schlägt weiterhin ein Verfahren zur direkten Erwärmung eines flüssigen Lebensmitteiproduktes, insbesondere eines Moikereiproduktes wie Milch, Sahne oder Joghurt, in einem Infusionssystem vor. Letzteres umfasst u.a. in an sich bekannter Weise eine Infusionskammer, der das zu erwärmende Lebensmittelprodukt im oberen Bereich zugeführt und aus der das erwärmte Lebensmittelprodukt im unteren Bereich abgeführt wird. Das in die Infusionskammer feinverteilt eintretende, zu erwärmende Lebensmittelprodukt durchsetzt die Infusionskammer als Fallströmung. Dem oberen Bereich wird das Heizmedium Dampf zugeführt, wobei über die gesamte Verweilzeit des zu erwärmenden Lebensmittelprodukts in der Infusionskammer dieses in einen Wärmeaustausch mit dem Dampf tritt.

Der erfindungswesentliche verfahrenstechnische Grundgedanke besteht darin, dass ein erster Dampf als innerer Freistrahl dem oberen Bereich zentral von oben nach unten zugeführt wird, und dass das zu erwärmende Lebensmittelprodukt als ringförmiger, den inneren Freistrahl des ersten Dampfes vorzugsweise konzentrisch umschließender mittlerer Freistrahl dem oberen Bereich von oben nach unten zugeführt wird, und dass ein zweiter Dampf als ringförmiger, äußerer Freistrahl, der den mittleren Freistrahl vorzugsweise konzentrisch umschließt, dem oberen Bereich von oben nach unten zugeführt wird. Die strömungsphysikalischen Auswirkungen dieser sich von der bisherigen Vorgehensweise im Stand der Technik signifikant unterscheidenden verfahrenstechnischen Maßnahmen wurden im Zusammenhang mit dem erfindungsgemäßen Infusionssystem vorstehend bereits beschrieben.

Es hat sich als zielführend herausgestellt, wie dies auch vorgesehen ist, wenn der erste Kanal am Eintritt in den oberen Bereich das zu erwärmende Lebensmittelprodukt in feinen Tröpfchen oder als Filmströmung ausbildet. Entscheidend ist, dass die tröpfchen- oder fimströmungsbildenden Querschnitte konzentrisch um die Eintragungsstelle des ersten Dampfes in die Infusionskammer herum gruppiert sind.

Die Beaufschlagung des ringförmig ausgebrachten, zu erwärmenden Lebensmittelproduktes durch den diesem zentral innenseits zugeführten ersten Dampf und durch den ringförmig außenseits zugeführten zweiten Dampf eröffnet einerseits die Möglichkeit einer sehr vorteilhaften Steuerung des Wärmeeintrags in das zu erwärmende Lebensmittelprodukt. Die Steuerung erfolgt in überraschend einfacher Weise durch eine Veränderung des Mengenverhältnisses zwischen dem ersten und dem zweiten Dampf. Andererseits hat es sich in von vornherein nicht zu erwartender Weise gezeigt, dass durch die vorg. Steuerung des Mengenverhältnisses die Bündelung des ausgebrachten Strahles des zu erwärmenden Lebensmittelprodukts und seine Fokussierung im Zentrum des Infusorbehälters erreicht werden.

Das Infusionssystem wird nach einer besonderen Ausbildung der Erfindung vorzugsweise bei einer Prozessanlage zur Herstellung einer UHT-Milch (Ultrahochtemperatur-Milch) oder ESL-Milch (Extended shelf life-Milch) im Zuge der Milcherhitzung verwendet mit der Maßgabe, dass die zu erwärmende Milch der Prozessanlage entnommen und dass die erwärmte Milch in der Prozessanlage weiterverarbeitet wird.

Das Infusionssystem findet darüber hinaus vorteilhafte Anwendung in Prozessanlagen zur Herstellung eines Molkereiprodukt, und hier insbesondere zur Herstellung von Sahne oder Joghurt.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, wird in der Zeichnung ein Ausführungsbeispiel einer bevorzugten Ausführungsform des vorgeschlagenen Infusionssystems dargestellt und nachfolgend nach Aufbau und Funktion beschrieben. Es zeigen
- **Figur 1**: einen Mittelschnitt durch eine bevorzugte erste Ausführungsform eines Infusionssystems gemäß der Erfindung mit einem infusorbehälter und einem Infusorkopf am Kopfende des Infusorbehälters als wesentliche Bestandteile;
- **Figur 1a**: einen Mittelschnitt durch eine zweite Ausführungsform eines Infusionssystems gemäß der Erfindung mit einem Infusorbehälter, einem nicht dargestellten Infusorkopf gemäß **Figur 1** am Kopfende und einer Fangeinrichtung am Fußende des Infusorbehälters als wesentliche Bestandteile;
- **Figur 2**: in vergrößerter Darstellung den Mittelschnitt durch das Infusionssystem gemäß **Figur 1** im Bereich des Kopfendes des Infusorbehälters und den Infusorkopf umfassend;
- **Figur 3**: in vergrößerter Darstellung den Mittelschnitt durch das Infusionssystem gemäß **Figur 1a** im unteren Bereich und die Fangeinrichtung umfassend und
- **Figur 3a**: in perspektivischer Darstellung den Mittelschnitt durch das Infusionssystem gemäß **Figur 3**.

### DETAILLIERTE BESCHREIBUNG

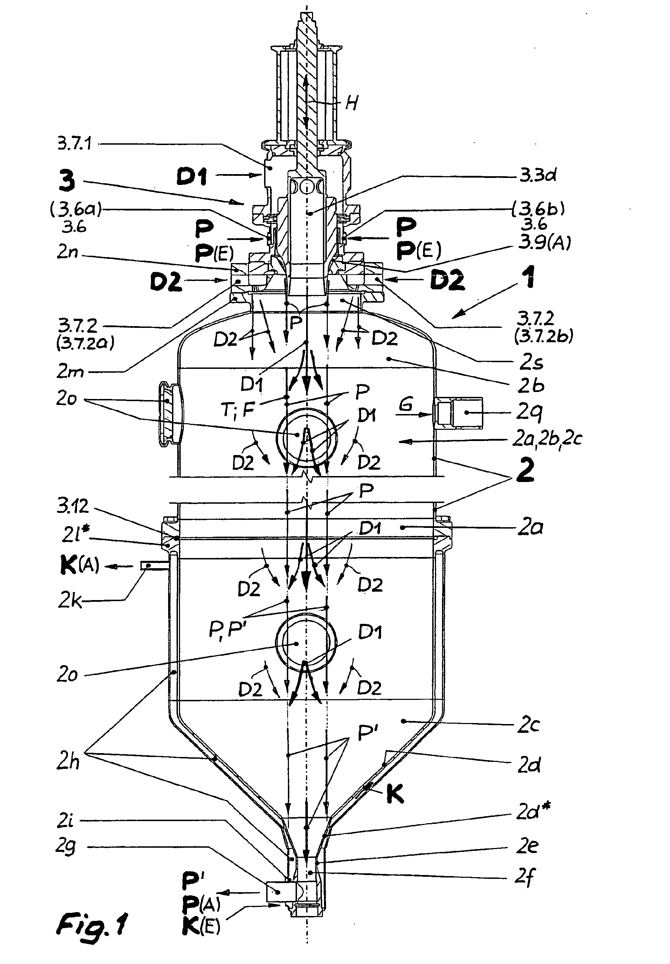

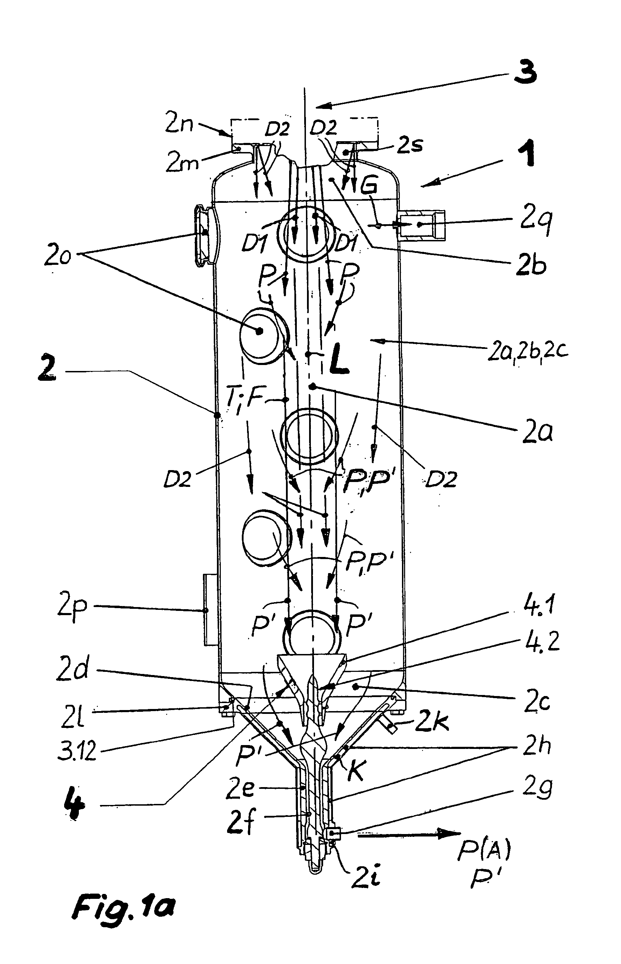

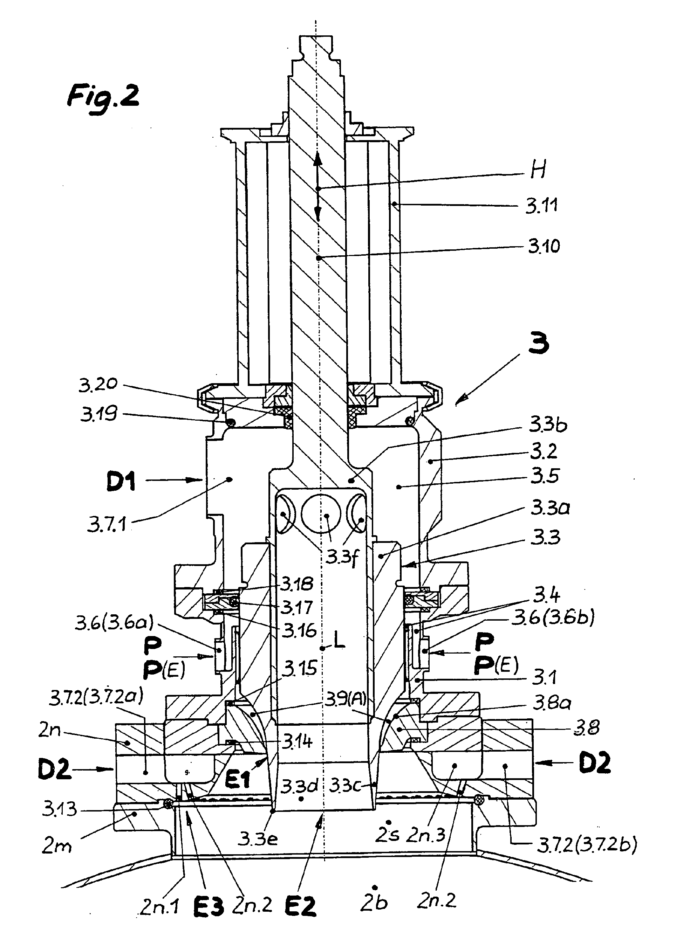

Ein Infusionssystem 1 (**Figuren 1** bis **3a**) für ein zu erwärmendes Lebensmittelprodukt P beinhaltet einen Infusorbehälter 2 mit einem sich nach unten verjüngenden, vorzugsweise konischen Boden 2d und einen Infusorkopf 3 am Kopfende. Der Infusorbehälter 2 begrenzt eine Infusionskammer 2a, 2b, 2c mit einem Produkt-Einlass 3.6 für das zu erwärmende Lebensmittelprodukt P in ihrem oberen Bereich 2b und mit einem Produkt-Auslass 2g für das erwärmte Lebensmittelprodukt P', das diesen als austretenden Produktstrom P(A) verlässt, in ihrem unteren Bereich 2c. Der Produkt-Einlass 3.6 für einen eintretenden Produktstrom (P(E) ist in einer bevorzugten und in den **Figuren 1** und **2** dargestellten Ausführungsform in Gestalt eines ersten Produkt-Einlassstutzens 3.6a und eines zweiten Produkt-Einlassstutzens 3.6b ausgebildet, die vorzugsweise diametral einander gegenüberliegend in eine ringförmige Produktkammer 3.4 einmünden.

Die Infusionskammer 2a, 2b, 2c besitzt weiterhin oberhalb ihres oberen Bereichs 2b einen ersten Dampf-Einlass 3.7.1 für ein Heizmedium erster Dampf D1, vorzugsweise Wasserdampf im Zustand des Heißdampfes, und einen zweiten Dampf-Einlass 3.7.2 für ein ebensolches Heizmedium zweiter Dampf D2. Beide Dampf-Einlässe 3.7.1 und 3.7.2 sind örtlich und strömungstechnisch voneinander getrennt ausgeführt, und die jeweils von ihnen fortführenden Strömungswege münden in Bezug auf das zu erwärmende Lebensmittelprodukt P an unterschiedlichen, nachfolgend noch beschriebenen Stellen in den oberen Bereich 2b ein. In einer bevorzugten und in **Figur 1** dargestellten Ausführungsform ist der zweite Dampf-Einlass 3.7.2 in Gestalt eines ersten Dampf-Einlassstutzens 3.7.2a und eines zweiten Dampf-Einlassstutzens 3.7.2b ausgebildet, die vorzugsweise diametral einander gegenüberliegend in eine vorzugsweise ringförmig ausgebildete Dampfverteilungskammer 2n.3 einmünden.

Das untere Ende des konischen Bodens 2d mündet in einen konischen Auslauf 2d* ein und an diesen schließt sich ein einen Auslasskanal 2f aufnehmendes Auslassrohr 2e an, das oberhalb seines unteren Endes in den quer verlaufenden Produkt-Auslass 2g abzweigt. Das untere Ende des Auslassrohres 2e ist über einen nicht dargestellten und bezeichneten Stopfen verschlossen. Der konische Boden 2d und zusätzlich der sich oberhalb anschließende untere Teil eines mittleren Bereichs 2a des Infusorbehälters 2 sind doppelwandig ausgeführt und zwischen den beiden Wandungen ist ein vorzugsweise im Gegenstrom mit Kühlmittel K beaufschlagbarer Kühlmittelraum 2h vorgesehen, der sich auch über den Umfang und die gesamte axiale Länge des Auslassrohres 2e bis zum Produkt-Auslass 2g hin erstreckt (**Figur 1**)**.** Der Kühlmittelraum 2h besitzt bei Gegenstrombeaufschlagung an seinem unteren Ende einen mit einem eintretenden Kühlmittelstrom K(E) beaufschlagten Kühlmitteleintritt 2i, der vorzugsweise vom Produkt-Auslass 2g durchdrungen ist, und an seinem oberen Ende einen einen austretenden Kühlmittelstrom K(A) abführenden Kühlmittelaustritt 2k. Der Kühlmittelraum 2h endet obenseits in einem Flansch 2I*, wobei letzterer mit dem Mantel des restlichen, sich nach oben fortsetzenden Infusorbehälters 2 lösbar, vorzugsweise mittels Schraubenverbindungen, und mit einer ersten Gehäusedichtung 3.12 abgedichtet, vorzugsweise mittels eines O-Rings, verbunden ist.

Der Infusorbehälter 2 besitzt an seinem Kopfende einen ringförmigen, eine obere Behälteröffnung 2s berandenden Kopfflansch 2m, der mit einem Kopfgegenflansch 2n (**Figuren 1**, 2) lösbar, vorzugsweise mittels Schraubenverbindungen, verbunden ist. Obenseits am Kopfgegenflansch 2n ist, vorzugsweise mittels Schraubenverbindungen, der Infusorkopf 3 lösbar befestigt, der aus einem dem Kopfgegenflansch 2n benachbarten Produktgehäuse 3.1 (**Figur 2**) und einem sich diesem anschließenden Dampfgehäuse 3.2 besteht.

Das Produktgehäuse 3.1 und das Dampfgehäuse 3.2 sind jeweils von einem inneren Gehäusekörper 3.3 vorzugsweise konzentrisch und in Richtung einer Längsachse L der Infusionskammer 2a, 2b, 2c verschieblich und mittels einer sechsten Gehäusedichtung 3.17 abgedichtet durchdrungen. Ein vorzugsweise zylindrisch ausgebildeter mittlerer 3.3a und ein, in radialer Richtung gesehen, sich nach unten und von außen nach innen verjüngender, vorzugsweise konischer oder kegelförmiger unterer Körperteil 3.3c des inneren Gehäusekörpers 3.3 bilden mit dem Produktgehäuse 3.1 die ringförmige Produktkammer 3.4. Letztere erstreckt sich in ihrem oberen Teil zunächst entlang des mittleren Gehäusekörpers 3.3a nach oben und anschließend, quasi meanderförmig, nach unten, wobei sie an ihrem unteren Ende mit dem ersten Produkt-Einlass 3.6 verbunden ist. Der mittlere 3.3a und ein vorzugsweise zylindrisch ausgebildeter oberer Körperteil 3.3b des inneren Gehäusekörpers 3.3, der sich nach oben in einer Verstellstange 3.10 fortsetzt, bilden mit dem Dampfgehäuse 3.2 eine ringförmige Dampfkammer 3.5, die mit dem ersten Dampf-Einlass 3.7.1 verbunden ist.

Die Dampfkammer 3.5 ist an ihrem unteren Ende innenseits gegenüber dem mittleren Körperteil 3.3a mittels der im Gleiteingriff stehenden sechsten Gehäusedichtung 3.17 und außenseits gegenüber dem Dampfgehäuse 3.2 mittels einer siebten Gehäusedichtung 3.18 abgedichtet. An ihrem oberen Ende ist die Dampfkammer 3.5 innenseits gegenüber der Verstellstange 3.10 mittels einer neunten Gehäusedichtung 3.20 und außenseits gegenüber dem Dampfgehäuse 3.2 mittels einer achten Gehäusedichtung 3.19 abgedichtet. Die Produktkammer 3.4 ist an ihrem oberen Ende innenseits gegenüber dem mittleren Körperteil 3.3a mit der vorstehend bereits genannten sechsten Gehäusedichtung 3.17 und außenseits gegenüber dem Produktgehäuse 3.1 mittels einer fünften Gehäusedichtung 3.16 abgedichtet. Zwischen zwei nicht bezeichneten ringförmigen Scheiben findet innenseits die sechste Gehäusedichtung 3.17 Aufnahme. Außenseits sind die beiden Scheiben zwischen dem Produkt- und dem Dampfgehäuse 3.1, 3.2 eingespannt, wobei die untere Scheibe eine Abdichtfläche gegenüber der fünften Gehäusedichtung 3.16 und die obere Scheibe eine Abdichtfläche gegenüber der siebten Gehäusedichtung 3.18 bilden.

Die mit dem oberen Ende des inneren Gehäusekörpers 3.3 vorzugsweise fest verbundene Verstellstange 3.10 erstreckt sich in der Längsachse L, durchdringt nach oben das Dampfgehäuse 3.2 und durchsetzt ein laternenartig ausgebildetes Halte- und Führungsgehäuse 3.11, in dem sie jeweils endseitig geführt ist. Die Verstellstange 3.10 ist oberhalb des Halte- und Führungsgehäuses 3.11 mit einem nicht dargestellten Stellantrieb verbunden, mit dem der innere Gehäusekörper 3,3 in axialer Richtung um einen Verstellhub H verschoben werden kann (s. **Figuren 1**,**2**).

Der innere Gehäusekörper 3.3 nimmt radial innenseits in seinem unteren, mittleren und bis in den oberen Körperteil 3.3c, 3.3a, 3.3b hinein einen vorzugsweise zentral angeordneten zweiten Kanal 3.3d auf **(****Figuren 2**, **1**), der an seinem oberen Ende über mehrere über den Umfang des inneren Gehäusekörpers 3.3 verteilt angeordnete Zulauföffnungen 3.3f eine Verbindung zu der ihn umfangsseitig umgebenden ringförmigen Dampfkammer 3.5 innerhalb des Dampfgehäuses 3.2 aufweist. Der zweite Kanal 3.3d mündet an seinem unteren Ende über den unteren Körperteil 3.3c im Zentrum des oberen Bereichs 2b und vorzugsweise in Richtung der Längsachse L der Infusionskammer 2a, 2b, 2c in letztere ein.

Die ringförmige Produktkammer 3.4 innerhalb des Produktgehäuses 3.1 setzt sich nach unten in einem vorzugsweise ringförmig ausgebildeten ersten Kanal 3.9 fort, der den zweiten Kanal 3.3d vorzugsweise konzentrisch umschließt und gleichfalls im oberen Bereich 2b und von oben in die Infusionskammer 2a, 2b, 2c einmündet. Im Ausführungsbeispiel bildet der erste Kanal 3.9 am Eintritt in den oberen Bereich 2b das zu erwärmende Produkt P als Filmströmung F aus (**Figur 1**)**.** Es kann an dieser Stelle aber auch eine Ausbildung in feinen Tröpfchen T vorliegen. Die Anordnung ist weiterhin so getroffen, dass der erste Kanal 3.9 im oberen Bereich 2b eine erste Einmündungsstelle E1 und der zentrale zweite Kanal 3.3d im oberen Bereich 2b eine zweite Einmündungsstelle E2 besitzen, wobei die erste Einmündungsstelle E1 oberhalb der zweiten Einmündungsstelle E2 vorgesehen ist (**Figur 2**).

Der ringförmige erste Kanal 3.9 weist an seiner tröpfchen- oder filmströmungsbildenden ersten Einmündungsstelle E1 in den oberen Bereich 2b einen veränderlichen Durchtrittsquerschnitt A auf, der im Ausführungsbeispiel stufenlos veränderbar ist. Dies gelingt dadurch, dass der Durchtrittsquerschnitt A die Form eines Ringspaltquerschnittes besitzt, der zwischen einer vorzugsweise düsenförmig ausgebildeten Bohrung 3.8a in dem den oberen Bereich 2b der Infusionskammer 2a, 2b, 2c begrenzenden Kopfgegenflansch 2n und dem die düsenförmige Bohrung 3.8a durchdringenden, vorzugsweise konisch ausgeführten unteren Körperteil 3.3c gebildet ist. Die düsenförmige Bohrung 3.8a ist bevorzugt als konvergierende Düse und vorzugsweise in einer separaten Düsenplatte 3.8 ausgebildet, wobei letztere durch den Kopfgegenflansch 2n hindurchgreift und in diesem mittels des unteren Endes des Infusorkopfes 3, dem Produktgehäuse 3.1, form- und kraftschlüssig eingebettet ist (**Figur 2**). Die Abdichtung der Düsenplatte 3.8 untenseits gegenüber dem Kopfgegenflansch 2n erfolgt über eine dritte Gehäusedichtung 3.14 und obenseits gegenüber dem Produktgehäuse 3.1 über eine vierte Gehäusedichtung 3.15. Der Kopfgegenflansch 2n ist gegenüber dem Kopfflansch 2m mittels einer zweiten Gehäusedichtung 3.13 abgedichtet.

Der untere Körperteil 3.3c greift in den oberen Bereich 2b hinein (Figur 2), verjüngt sich dorthin und im Durchdringungsbereich mit der Düsenplatte 3.8 radial außenseits und bildet den endseitigen Teil des inneren Gehäusekörpers 3.3, der über die Verstellstange 3.10 von außerhalb des Infusorbehälters 2 in dessen Längsachse L um den Verstellhub H axial verschieblich ist. Der zentrale zweite Kanal 3.3d erweitert sich an seiner Austrittsstelle im konischen unteren Körperteil 3.3c vorzugsweise diffusorartig, und zwar derart, dass seine diffusorartige Innenkontur und die konische Mantelfläche des unteren Körperteils 3.3c endseitig eine schneidenförmige Umlaufkante 3.3e ausbilden.

Der zweite Dampf-Einlass 3.7.2, der vorzugsweise über die beiden Dampf-Einlassstutzen 3.7.2a, 3.7.2b in die im Kopfgegenflansch 2n ausgebildete Dampfverteilungskammer 2n.3 einmündet (Figur 2), ist fluiddurchlässig mit einer Vielzahl von Eintrittsöffnungen 2n.1 und 2n.2 verbunden, die ringförmig angeordnet sind, die den ersten Kanal 3.9 radial außenseits umschließen und die im oberen Bereich 2b und von oben in die Infusionskammer 2a, 2b, 2c einmünden und dort eine dritte Einmündungsstelle E3 für den zweiten Dampf D2 besitzen. Die dritte Einmündungsstelle E3 ist dabei vorzugsweise annähernd auf gleicher Höhe wie die zweite Einmündungsstelle E2 für den ersten Dampf D1 angeordnet.

Die Eintrittsöffnungen 2n.1, 2n.2 sind vorzugsweise in Form eines ersten Kranzes Eintrittsöffnungen 2n.1 und eines zweiten Kranzes Eintrittsöffnungen 2n.2 ausgebildet, wobei der erste Kranz Eintrittsöffnungen 2n.1 den zweiten Kranz Eintrittsöffnungen 2n.2 radial außenseits, vorzugsweise konzentrisch, umschließt. Dabei münden der erste und der zweite Kranz Eintrittsöffnungen 2n.1, 2n.2 vorzugsweise unmittelbar im Wandungsbereich der vorzugsweise zur Längsachse L konzentrischen oberen Behälteröffnung 2s aus, und der erste Kranz Eintrittsöffnungen 2n,1 ist vorzugsweise parallel zur Längsachse L und der zweite Kranz Eintrittsöffnungen 2n.2 ist vorzugsweise nach unten zur Längsachse L hin geneigt orientiert.

Im oberen Bereich 2b ist eine nicht dargestellte und bezeichnete Reinigungseinrichtung zur automatischen Reinigung aller inneren Oberflächen der Infusionskammer 2a, 2b, 2c mit einem Reinigungsmittel angeordnet, wobei die Reinigungseinrichtung im Ausführungsbeispiel aus einem durch den oberen Boden des Infusorbehälters 2 hindurchgreifenden Zuführrohr mit einer an dessen Ende angeordneten Sprühkugel besteht. Zu visuellen Inspektionszwecken, insbesondere während des Betriebs des Infusionssystems 1, verfügt der Infusorbehälter 2 auf seiner gesamten Erstreckungslänge über eine Anzahl Schaugläser 2o. Während des Betriebs des Infusionssystems 1 aus dem zu erwärmenden Produkt P austretende, nicht kondensierbare Gase G werden über einen im oberen Bereich 2b des Infusorbehälters 2 angeordneten Gas-Auslassstutzen 2q in die Umgebung abgeführt (**Figur 1**).

Eine zweite Ausführungsform des Infusorsystems 1 (**Figur 1a**) unterscheidet sich von der vorstehend beschriebenen ersten Ausführungsform nach **Figur 1** durch eine veränderte Ausbildung des unteren Bereichs 2c und des sich anschließenden Bodens 2d des Infursorbehälters 2, wobei im unteren Bereich 2c zusätzlich Einbauten zur Beeinflussung der Ableitung des erwärmten Lebensmittelproduktes P' vorgesehen sind.

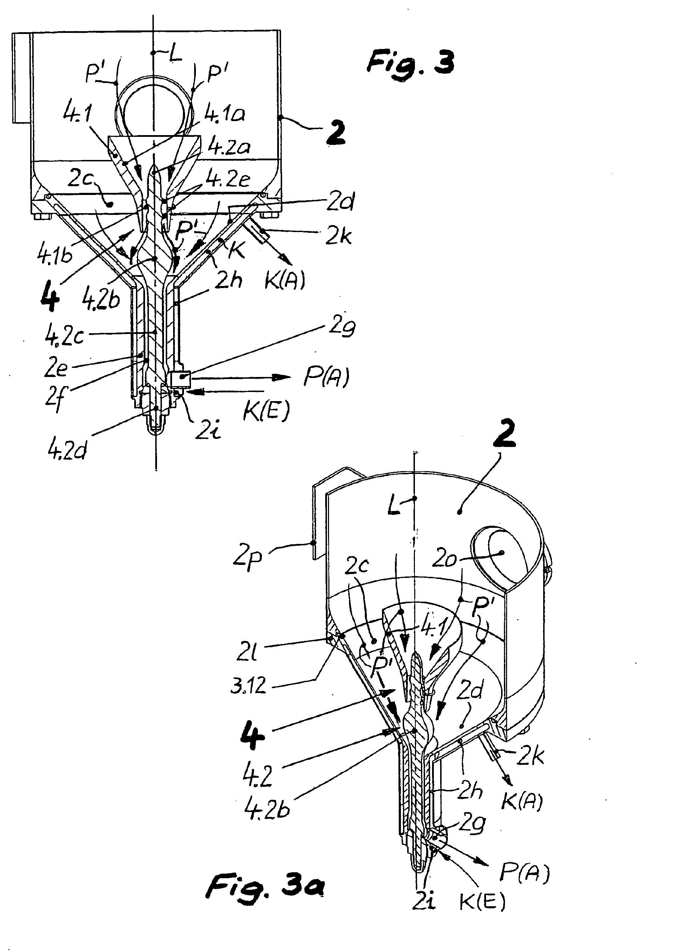

In der vorstehend bereits beschriebenen Weise schließt sich am unteren Ende des vorzugsweise konisch ausgebildeten Bodens 2d (**Figur 1a**) das den Auslasskanal 2f aufnehmende Auslassrohr 2e an, das an seinem unteren Ende in den Produkt-Auslass 2g übergeht (**Figuren 1****,** **3, 3a**). Der konische Boden 2d endet, im Unterschied zur ersten Ausführungsform nach **Figur 1****,** obenseits in einem Bodenflansch 2I, wobei letzterer mit dem Mantel des Infusorbehälters 2 lösbar, vorzugsweise mittels Schraubenverbindungen, und mit der ersten Gehäusedichtung 3.12 abgedichtet, vorzugsweise mittels eines O-Rings, verbunden ist. Über eine Behälterhalterung 2p wird das Infusorsystem 1 ortsfest befestigt.

Im unteren Bereich 2c der Infusionskammer 2a, 2b, 2c ist eine Fangeinrichtung 4 vorgesehen (**Figuren 3, 3a**), die wenigstens aus einem Fangtrichter 4.1 besteht, dessen konisch sich nach unten verjüngender Einlaufmantel 4.1a in einen nach unten offenen Ablaufkanal 4.1 b ausmündet. Der Ablaufkanal 4.1 b fluchtet mit dem in dem Auslassrohr 2e angeordneten Auslasskanal 2f. Die Auslaufwiderstände und -verluste im Auslaufbereich der Infusionskammer lassen sich reduzieren bzw. minimieren, wenn Wirbel und Strudel in diesem Bereich weitgehend verhindert werden. Dies gelingt durch einen Ablaufdorn 4.2, der im unteren Ende des Auslassrohres 2e mit einem Befestigungsabschnitt 4.2d befestigt ist und der zum Zwecke einer verlustarmen Umströmung mit hinreichendem Abstand zum Auslassrohr 2e durch den Auslasskanal 2f mit einem Abströmabschnitt 4.2c und durch den Ablaufkanal 4.1 b bis in den Innenraum des konischen Einlaufmantels 4.1a mit einem Anströmabschnitt 4.2a hindurchgreift. Der Anströmabschnitt 4.2a verjüngt sich an seinem oberen Ende spitz zulaufend. Der Ablaufdorn 4.2 weist im Zwischenraum zwischen dem unteren Ende des Fangtrichters 4.1 und dem oberen Ende des Auslasskanals 2f einen Erweiterungsteil 4.2b auf, wobei sich letzterer radial erweitert und allseits stetig gekrümmt ausgebildet ist. Der Ablaufdorn 4.2 ist in seinem Durchdringungsbereich mit dem Fangtrichter 4.1 über wenigstens eine Befestigungstraverse 4.2e mit letzterem fest verbunden.

Der über den Produkt-Einlass 3.6 auf dem Weg über die beiden Produkt-Einlassstutzen 3.6a, 3.6b in den Infusorkopf 3 eintretende Produktstrom P(E) (Figuren 2, 1), das zu erwärmende Lebensmittelprodukt P, gelangt über die ringförmige Produktkammer 3.4 und den sich daran untenseits anschließenden ringförmigen ersten Kanal 3.9 zur ersten Einmündungsstelle E1 und tritt über diese als ringförmiger Strahl in Form einer Filmströmung F in den oberen Bereich 2b der Infusionskammer 2a, 2b, 2c aus, um von dort als Fallströmung durch den mittleren Bereich 2a bis in den unteren Bereich 2c, untenseits begrenzt durch den konischen Boden 2d, zu fallen. Zeitgleich zum eintretenden Produktstrom P(E) werden dem ersten Dampf-Einlass 3.7.1 der erste Dampf D1 und dem zweiten Dampf-Einlass 3.7.2 der zweite Dampf D2 zugeführt. Der erste Dampf D1 gelangt über die ringförmige Dampfkammer 3.5 und die Zulauföffnungen 3.3f in den zentralen zweiten Kanal 3.3d, um von dort über die zweite Einmündungsstelle E2 ein Stück weit unterhalb der ersten Einmündungsstelle E1 in den oberen Bereich 2b und innenseits vom ringförmig austretenden Strahl des Lebensmittelprodukts P auszutreten. Der zweite Dampf D2 strömt der ringförmigen Dampfverteilungskammer 2n.3 über die beiden Dampf-Einlassstutzen 3.7.2a, 3.7.2b zu, um von dort über den ersten und den zweiten Kranz Eintrittsöffnungen 2n.1, 2n.2 an der dritten Einmündungsstelle E3, gleichfalls in den oberen Bereich 2b und nunmehr außenseits vom ringförmig austretenden Strahl des Lebensmittelprodukts P, auszutreten.

Der frei nach unten als Strahl austretende erste Dampf D1 (**Figur 1**) vermischt sich dabei mit dem ihn umschließenden ringförmigen Strahl des zu erwärmenden Lebensmittelprodukts P in der Weise, dass der erste Dampf D1 das zu erwärmende Lebensmittelprodukt P in axialer Richtung und radial von außen nach innen mitreißt. Der gleichfalls nach unten als Strahl austretende zweite Dampf D2 umhüllt den ringförmigen Strahl des Lebensmittelprodukts P. Letzteres tritt über die gesamte Fallzeit und damit auch über seine gesamte Verweilzeit in der Infusionskammer 2a, 2b, 2c in einen direkten Wärmeaustausch mit dem ersten und dem zweiten Dampf D1, D2, wobei der innenseitige Wärmeeintrag durch den ersten Dampf D1 und die damit verbundenen bündelnden und fokussierenden Effekte überwiegen. Nicht erfasstes, radial nach außen abdriftendes Lebensmittelprodukt P wird vom zweiten Dampf D2 erfasst und erwärmt und darüber hinaus wird durch den zweiten Dampf D2 auch weitestgehend eine Anhaftung und ein Anbrennen dieses Lebensmittelprodukts P an der Mantelfläche des Infusorbehälters 2 verhindert.

Durch das steuerbare Mengenverhältnis zwischen erstem und zweitem Dampf D1, D2 ist das Verhältnis der Wärmeeinträge in den Strahl des Lebensmittelproduktes P zwischen innen und außen in einem weiten Bereich steuerbar, und es lässt sich über dieses Mengenverhältnis D1/D2 auch die Bündelung und Fokussierung des Strahls des Lebensmittelproduktes P in der gewünschten Weise erreichen. Das Mengenverhältnis D1/D2 ist sehr einfach über einen ersten Druck p(D1) des ersten Dampfes D1 und einen zweiten Druck p(D2) des zweiten Dampfes D2 oder über einen Differenzdruck Δp, der sich aus der Differenz zwischen dem ersten Druck p(D1) und dem zweiten Druck p(D2) ergibt (Δp = p(D1) - p(D2)), veränderbar.

Über eine axiale Verschiebung des inneren Gehäusekörpers 3.3 mittels der Verstellstange 3.10, maximal im Umfang des Verstellhubes H, lässt sich die filmströmungsbildende erste Einmündungsstelle E1 des ringförmigen ersten Kanals 3.9 in den oberen Bereich 2b in seinem Durchtrittsquerschnitt A stufenlos verändern. Es lässt sich hier auch eine Anordnung treffen, in der feine Tröpfchen T ausgebildet werden, deren Größe entweder stufenlos oder deren Anzahl in Stufen, beispielsweise durch Teilbeaufschlagung vorhandener tröpfchenbildender Durchtrittsquerschnitte, veränderbar ist.

Der Strahl des Lebensmittelprodukts P bleibt im Wesentlichen zentral gebündelt und gelangt als erwärmtes Lebensmittelprodukt P' im unteren Bereich 2c in den konischen Auslauf 2d* (**Figur 1**) oder überwiegend in den Fangtrichter 4.1 der Fangeinrichtung 4 (**Figuren 1** **a. 3, 3a**), Im letztgenannten Ausführungsbeispiel strömt das Lebensmittelprodukt P' von hier über den Ablaufkanal 4.1 b, strömungstechnisch vom Ablaufdorn 4.2 geleitet und unterstützt, dem Auslasskanal 2f zu. Außerhalb des Fangtrichters 4.1 dem konischen Boden 2d zuströmendes Lebensmittelprodukt P' gelangt unterhalb des Erweiterungsteils 4.2b des Ablaufdorns 4.2 gleichfalls in den Ablaufkanal 2f und vereinigt sich dort mit den Anteilen aus dem zentralen Bereich.

Der Gesamtstrom des erwärmten Lebensmittelproduktes P' verlässt als austretender Produktstrom P(A) den Produkt-Auslass 2g (**Figuren 1, 1 a, 3, 3a**) und wird von dort der nachgeordneten Prozessanlage zur Weiterbehandlung zugeführt. Der konische Boden 2d sowie das sich untenseits anschließende Auslassrohr 2e werden über den Kühlmittelraum 2h vorzugsweise im Gegenstrom gekühlt, wobei der eintretende Kühlmittelstrom K(E) dem Kühlmitteleintritt 2i zugeführt und der austretende Kühlmittelstrom K(A) über den Kühlmittelaustritt 2k abgeführt werden.

**BEZUGSZEICHENLISTE DER VERWENDETEN ABKÜRZUNGEN**

| | |
|---|---|
| 1 | Infusionssystem |
| | |
| 2 | Infusorbehälter |
| 2a,2b,2c | Infusionskammer |
| 2a | mittlerer Bereich |
| 2b | oberer Bereich |
| 2c | unterer Bereich |
| 2d | Boden (sich nach unten verjüngend) |
| 2d* | konischer Auslauf |
| 2e | Auslassrohr |
| 2f | Auslasskanal |
| 2g | Produkt-Auslass (für das erwärmte Lebensmittelprodukt P') |
| 2h | Kühlmittelraum |
| 2i | Kühlmitteleintritt |
| 2k | Kühlmittelaustritt |
| 2l | Bodenflansch |
| 2l* | Flansch |
| 2m | Kopfflansch |
| | |
| 2n | Kopfgegenflansch |
| 2n.1 | erster Kranz Eintrittsöffnungen |
| 2n.2 | zweiter Kranz Eintrittsöffnungen |
| 2n.3 | (ringförmige) Dampfverteilungskammer |
| | |
| 2o | Schauglas |
| 2p | Behälterhalterung |
| 2q | Gas-Auslassstutzen |
| 2s | obere Behälteröffnung |
| | |
| 3 | Infusorkopf |
| 3.1 | Produktgehäuse |
| 3.2 | Dampfgehäuse |
| 3.3 | innerer Gehäusekörper |
| 3.3a | (zylindrischer) mittleren Körperteil |
| 3.3b | (zylindrischer) oberer Körperteil |
| 3.3c | unterer Körperteil (sich außenseits nach unten verjüngend) |
| 3.3d | (zentraler) zweiter Kanal |
| 3.3e | schneidenförmige Umlaufkante |
| 3.3f | Zulauföffnung |
| | |
| 3.4 | ringförmige Produktkammer |
| 3.5 | ringförmige Dampfkammer |
| | |
| 3.6 | Produkt-Einlass |
| 3.6.a | erster Produkt-Einlassstutzen (für das zu erwärmende Lebensmittelprodukt P) |
| 3.6.b | zweiter Produkt-Einlassstutzen (für das zu erwärmende Lebensmittelprodukt P) |
| | |
| 3.7.1 | erster Dampf-Einlass (für Dampf D1) |
| | |
| 3.7.2 | zweiter Dampf-Einlass (für Dampf D2) |
| 3.7.2a | erster Dampf-Einlassstutzen (für Dampf D2) |
| 3.7.2b | zweiter Dampf-Einlassstutzen (für Dampf D2) |
| | |
| 3.8 | Düsenplatte |
| 3.8a | (düsenförmige) Bohrung |
| | |
| 3.9 | (ringförmiger) erster Kanal |
| 3.10 | Verstellstange |
| 3.11 | Halte- und Führungsgehäuse |
| | |
| 3.12 | erste Gehäusedichtung |
| 3.13 | zweite Gehäusedichtung |
| 3.14 | dritte Gehäusedichtung |
| 3.15 | vierte Gehäusedichtung |
| 3.16 | fünfte Gehäusedichtung |
| 3.17 | sechste Gehäusedichtung |
| 3.18 | siebte Gehäusedichtung |
| 3.19 | achte Gehäusedichtung |
| 3.20 | neunte Gehäusedichtung |
| | |
| 4 | Fangeinrichtung |
| | |
| 4.1 | Fangtrichter |
| 4.1a | (konischer) Einlaufmantel |
| 4.1b | Ablaufkanal |
| | |
| 4.2 | Ablaufdorn |
| 4.2a | Anströmabschnitt |
| 4.2b | Erweiterungsteil |
| 4.2c | Abströmabschnitt |
| 4.2d | Befestigungsabschnitt |
| 4.2e | Befestigungstraverse |
| | |
| A | Durchtrittsquerschnitt |
| | |
| D1 | erster Dampf (Wasserdampf, vorzugsweise als Heißdampf) |
| D2 | zweiter Dampf (Wasserdampf, vorzugsweise als Heißdampf) |
| | |
| E1 | erste Einmündungsstelle |
| E2 | zweite Einmündungsstelle |
| E3 | dritte Einmündungsstelle |
| | |
| F | Filmströmung |
| | |
| G | nicht kondensierbare Gase |
| H | Verstellhub |
| | |
| K | Kühlmittel |
| K(E) | eintretender Kühlmittelstrom |
| K(A) | austretender Kühlmittelstrom |
| | |
| L | Längsachse (der Infusionskammer bzw. des Infusorbehälters) |
| | |
| P | zu erwärmendes Lebensmittelprodukt |
| P' | erwärmtes Lebensmittelprodukt |
| | |
| P(A) | austretender Produktstrom |
| P(E) | eintretender Produktstrom |
| | |
| T | Tröpfchen |
| | |
| p(D1) | erster Druck (des ersten Dampfes D1) |
| p(D2) | zweiter Druck (des zweiten Dampfes D2) |
| Δp | Differenzdruck (Δp = p(D1) - p(D2)) |

## Patentansprüche

1. Infusionssystem (1) für ein flüssiges, zu erwärmendes Lebensmittelprodukt (P), das eine von einem Infusorbehälter (2) mit einem sich nach unten verjüngenden Boden (2d) begrenzte Infusionskammer (2a, 2b, 2c) mit einem Produkt-Einlass (3.6) für das zu erwärmende Lebensmittelprodukt (P) in ihrem oberen Bereich (2b) und mit einem Produkt-Auslass (2g) für das erwärmte Lebensmittelprodukt (P') in ihrem unteren Bereich (2c) beinhaltet und das einen Dampf-Einlass für das Heizmedium Dampf in dem oberen Bereich (2b) aufweist,
**dadurch gekennzeichnet,**
• **dass** der Dampf-Einlass in Form von zwei örtlich und strömungstechnisch voneinander getrennten Dampf-Einlässen (3.7.1, 3.7.2) ausgebildet ist,
• **dass** der erste Dampf-Einlass (3.7.1) fluiddurchlässig mit einem zweiten Kanal (3.3d) verbunden ist und der zweite Kanal (3.3d) im Zentrum des oberen Bereichs (2b) in die Infusionskammer (2a, 2b, 2c) einmündet,
• **dass** der Produkt-Einlass (3.6; 3.6a, 3.6b) fluiddurchlässig mit einem ersten Kanal (3.9) verbunden ist, der den zweiten Kanal (3.3d) ringförmig umschließt und gleichfalls im oberen Bereich (2b) und von oben in die Infusionskammer (2a, 2b, 2c) einmündet,
• und **dass** der zweite Dampf-Einlass (3.7.2; 3.7.2a, 3.7.2b) fluiddurchlässig mit einer Vielzahl von Eintrittsöffnungen (2n.1, 2n.2) verbunden ist, die ringförmig angeordnet sind, die den ersten Kanal (3.9) radial außenseits umschließen und die gleichfalls im oberen Bereich (2b) und von oben in die Infusionskammer (2a, 2b, 2c) einmünden.

2. Infusionssystem nach Anspruch 1,
**dadurch gekennzeichnet,**
**dass** die Eintrittsöffnungen (2n.1, 2n.2) in Form eines ersten Kranzes Eintrittsöffnungen (2n.1) und eines zweiten Kranzes Eintrittsöffnungen (2n.2) ausgebildet sind, und dass der erste Kranz Eintrittsöffnungen (2n.1) den zweiten Kranz Eintrittsöffnungen (2n.2) radial außenseits umschließt.

3. Infusionssystem nach Anspruch 2,
**dadurch gekennzeichnet,**
**dass** der erste und der zweite Kranz Eintrittsöffnungen (2n.1, 2n.2) unmittelbar im Wandungsbereich einer oberen Behälteröffnung (2s) ausmünden, durch die sich der obere Bereich (2b) nach oben zum ersten Kanal (3.9) und zweiten Kanal (3.3d) hin öffnet.

4. Infusionssystem nach Anspruch 2 oder 3,
**dadurch gekennzeichnet,**
**dass** der erste Kranz Eintrittsöffnungen (2n.1) parallel zur Längsachse (L) und der zweite Kranz Eintrittsöffnungen (2n.2) nach unten zur Längsachse (L) hin geneigt orientiert sind.

5. Infusionssystem nach einem der vorhergehenden Ansprüche,
**dadurch gekennzeichnet,**
**dass** der erste Kanal (3.9) im oberen Bereich (2b) eine erste Einmündungsstelle (E1), der zweite Kanal (3.3d) im oberen Bereich (2b) eine zweite Einmündungsstelle (E2) und die Eintrittsöffnungen (2n.1, 2n.2) eine dritte Einmündungsstelle (E3) besitzen, dass die zweite und die dritte Einmündungsstelle (E2, E3) annähernd auf gleicher Höhe angeordnet sind, und dass die erste Einmündungsstelle (E1) oberhalb der zweiten Einmündungsstelle (E2) vorgesehen ist.

6. Infusionssystem nach einem der vorhergehenden Ansprüche,
**dadurch gekennzeichnet,**
**dass** der erste Kanal (3.9) an seiner ersten Einmündungsstelle (E1) einen veränderlichen Durchtrittsquerschnitt (A) aufweist.

7. Infusionssystem nach Anspruch 6,
**dadurch gekennzeichnet,**
**dass** der Durchtrittsquerschnitt (A) stufenlos oder in Stufen veränderbar ist.

8. Infusionssystem nach Anspruch 6 oder 7,
**dadurch gekennzeichnet,**
**dass** der Durchtrittsquerschnitt (A) die Form eines Ringspaltquerschnittes besitzt, der zwischen einer Bohrung (3.8a) in einem den oberen Bereich (2b) der Infusionskammer (2a, 2b, 2c) begrenzenden Kopfgegenflansch (2n) und einem die Bohrung (3.8a) durchdringenden unteren Körperteil (3.3c) gebildet ist, wobei letzterer in den oberen Bereich (2b) hineingreift, sich dorthin radial außenseits verjüngt und einen endseitigen Teil eines inneren Gehäusekörpers (3.3) bildet, der von außerhalb des Infusorbehälters (2) in dessen Längsachse (L) axial verschieblich ist.

9. Infusionssystem nach Anspruch 7,
**dadurch gekennzeichnet,**
**dass** die Bohrung (3.8a) als konvergierende Düse ausgebildet ist.

10. Infusionssystem nach Anspruch 8 oder 9,
**dadurch gekennzeichnet,**
**dass** der innere Gehäusekörper (3.3) radial innenseits den zweiten Kanal (3.3d) aufnimmt, der über mehrere über den Umfang des inneren Gehäusekörpers (3.3) verteilt angeordnete Zulauföffnungen (3.3f) eine Verbindung zur umfangsseitigen Umgebung des inneren Gehäusekörpers (3.3) aufweist.

11. Infusionssystem nach Anspruch 10,
**dadurch gekennzeichnet,**
**dass** sich der zweite Kanal (3.3d) an seiner Austrittsstelle im unteren Körperteil (3.3c) diffusorartig erweitert, und dass die diffusorartige Innenkontur und eine sich nach unten verjüngende Mantelfläche des unteren Körperteils (3.3c) endseitig eine schneidenförmige Umlaufkante (3.3e) ausbilden.

12. Infusionssystem nach einem der Ansprüche 8 bis 11,
**dadurch gekennzeichnet,**
**dass** ein obenseits am Kopfgegenflansch (2n) angeordneter Infusorkopf (3) vorgesehen ist, der aus einem dem Kopfgegenflansch (2n) benachbarten Produktgehäuse (3.1) und einem sich diesem anschließenden Dampfgehäuse (3.2) besteht, dass das Produktgehäuse (3.1) und das Dampfgehäuse (3.2) von dem inneren Gehäusekörper (3.3) in Richtung der Längsachse (L) verschieblich, abgedichtet durchdrungen sind, dass ein mittlerer und der untere Körperteil (3.3a, 3.3c) des inneren Gehäusekörpers (3.3) mit dem Produktgehäuse (3.1) eine ringförmige Produktkammer (3.4) mit dem Produkt-Einlass (3.6; 3.6a, 3.6b) und der mittlere (3.3a) und ein oberer Körperteil (3.3b) sowie eine sich an letzteren anschließende Verstellstange (3.10) des inneren Gehäusekörpers (3.3) mit dem Dampfgehäuse (3.2) eine ringförmige Dampfkammer (3.5) mit dem ersten Dampf-Einlass (3.7.1) bilden.

13. Infusionssystem nach einem der vorhergehenden Ansprüche,
**dadurch gekennzeichnet,**
**dass** im unteren Bereich (2c) der Infusionskammer (2a, 2b, 2c) eine Fangeinrichtung (4) vorgesehen ist, dass letztere wenigstens aus einem Fangtrichter (4.1) besteht, dessen konisch sich nach unten verjüngender Einlaufmantel (4.1 a) in einen nach unten offenen Ablaufkanal (4.1b) ausmündet, und dass der Ablaufkanal (4.1 b) mit einem in einem Auslassrohr (2e) angeordneten Auslasskanal (2f) fluchtet, wobei sich das Auslassrohr (2e) an seinem oberen Ende an den Boden (2d) anschließt und an seinem unteren Ende in den Produkt-Auslass (2g) übergeht.

14. Infusionssystem nach einem der vorhergehenden Ansprüche,
**dadurch gekennzeichnet,**
**dass** wenigstens der Boden (2d) doppelwandig ausgeführt und zwischen den beiden Wandungen ein mit Kühlmittel (K) beaufschlagbarer Kühlmittelraum (2h) vorgesehen ist.

15. Verfahren zur direkten Erwärmung eines flüssigen Lebensmittelproduktes (P) in einem Infusionssystem (1) mit einer Infusionskammer (2a, 2b, 2c), der das zu erwärmende Lebensmittelprodukt (P) im oberen Bereich (2b) zugeführt und aus der das erwärmte Lebensmittelprodukt (P') im unteren Bereich (2c) abgeführt wird, wobei das in die Infusionskammer (2a, 2b, 2c) feinverteilt eintretende, zu erwärmende Lebensmittelprodukt (P) die Infusionskammer (2a, 2b, 2c) als Fallströmung durchsetzt, wobei dem oberen Bereich (2b) Dampf zugeführt wird, und wobei über die gesamte Verweilzeit des zu erwärmenden Lebensmittelprodukts (P) in der Infusionskammer (2a, 2b, 2c) dieses in einen Wärmeaustausch mit dem Dampf tritt,
**dadurch gekennzeichnet,**
• **dass** ein erster Dampf (D1) als innerer Freistrahl dem oberen Bereich (2b) zentral von oben nach unten zugeführt wird,
• **dass** das zu erwärmende Lebensmittelprodukt (P) als ringförmiger, den inneren Freistrahl des ersten Dampfes (D1) umschließender mittlerer Freistrahl dem oberen Bereich (2b) von oben nach unten zugeführt wird,
• und **dass** ein zweiter Dampf (D2) als ringförmiger, äußerer Freistrahl, der den mittleren Freistrahl umschließt, dem oberen Bereich (2b) von oben nach unten zugeführt wird.

16. Verfahren nach Anspruch 15,
**dadurch gekennzeichnet,**
**dass** das zu erwärmende Lebensmittelprodukt (P) am Eintritt in den oberen Bereich (2b) in feinen Tröpfchen (T) ausgebildet wird.

17. Verfahren nach Anspruch 15 oder 16,
**dadurch gekennzeichnet,**
**dass** der Wärmeeintrag in das zu erwärmende Lebensmittelprodukt (P) über das Mengenverhältnis zwischen dem ersten und dem zweiten Dampf (D1, D2) gesteuert wird.

18. Verfahren nach einem der Ansprüche 15 bis 17,
d**adurch gekennzeichnet**,
dass das zu erwärmende Lebensmittelprodukt (P) ein Molkereiprodukt ist.

19. Verwendung eines Infusionssystems (1) nach einem oder mehreren der Ansprüche 1 bis 14 bei einer Prozessanlage zur Herstellung eines Molkereiprodukts.

20. Verwendung eines Infusionssystems (1) nach Anspruch 19,
**dadurch gekennzeichnet,**
**dass** das Molkereiprodukt UHT-Milch oder ESL-Milch ist, dass das zu erwärmende Lebensmittelprodukt (P), die zu erwärmende Milch, der Prozessanlage entnommen, zur Milcherhitzung dem Infusionssystem (1) zugeführt, und dass das erwärmte Lebensmittelprodukt (P'), die erwärmte Milch, anschließend in der Prozessanlage weiterverarbeitet wird.

## Claims

1. Infusion system (1) for a liquid food product (P) to be heated, including an infusion chamber (2a, 2b, 2c) limited by an infusion tank (2) with a downward tapering bottom (2d), said infusion chamber (2a, 2b, 2c) having a product inlet (3.6) for the food product to be heated (P) in its upper area (2b) and a product outlet (2g) for the heated food product (P') in its lower area (2c), said infusion system (1) having a steam inlet for the steam heating medium in the upper area (2b),
**characterised in**
• **that** the steam inlet is designed in the form of two steam inlets (3.7.1, 3.7.2) separated from each other spatially and fluidically;
• **that** the first steam inlet (3.7.1) is connected for passing fluid to a second channel (3.3d) and the second channel (3.3d) opens into the infusion chamber (2a, 2b, 2c) in the centre of the upper area (2b),
• **that** the product inlet (3.6; 3.6a,3.6b) is connected for passing fluid to a first channel (3.9) which encompasses the second channel (3.3d) in a ring shape and also opens into the infusion chamber (2a, 2b, 2c) in the upper area (2b) and from above,
• and **that** the second steam inlet (3.7.2; 3.7.2a, 3.7.2b) is connected for passing fluid to a plurality of inlet openings (2n.1, 2n.2) disposed in a ring shape and radially encompassing the first channel (3.9) on the exterior and also opening into the infusion chamber (2a, 2b, 2c) in the upper area (2b) and from above.

2. Infusion system according to claim 1,
**characterised in**
**that** the inlet openings (2n.1, 2n.2) are designed in the form of a first collar of inlet openings (2n.1) and of a second collar of inlet openings (2n.2), and that the first collar of inlet openings (2n.1) radially encompasses the second collar of inlet openings (2n.2) on the exterior.

3. Infusion system according to claim 2,
**characterised in**
**that** the first and the second collar of inlet openings (2n.1, 2n.2) open out directly into the wall area of an upper tank opening (2s) via which the upper area (2b) opens in the upward direction towards the first channel (3.9) and the second channel (3.3d).

4. Infusion system according to claim 2 or 3,
**characterised in**
**that** the first collar of inlet openings (2n.1) is oriented parallel to the longitudinal axis (L) and the second collar of inlet openings (2n.2) is oriented downward and slanted towards the longitudinal axis (L).

5. Infusion system according to any one of the preceding claims, **characterised in**
**that** the first channel (3.9) has a first point of confluence (E1) in the upper area (2b), the second channel (3.3d) has a second point of confluence (E2) in the upper area (2b), and the inlet openings (2n.1, 2n.2) have a third point of confluence (E3), that the second and the third point of confluence (E2, E3) are disposed approximately on the same height, and that the first point of confluence (E1) is provided above the second point of confluence (E2).

6. Infusion system according to any one of the preceding claims, **characterised in**
**that** the first channel (3.9) has a variable passage cross section (A) at its first point of confluence (E1).

7. Infusion system according to claim 6,
**characterised in**
**that** the passage cross section (A) can be changed continuously or in steps.

8. Infusion system according to claim 6 or 7,
**characterised in**
**that** the passage cross section (A) has the form of an annular gap shaped cross section which is formed between a bore (3.8a) in a head companion flange (2n) limiting the upper area (2b) of the infusion chamber (2a, 2b, 2c), and a lower body portion (3.3c) penetrating the bore (3.8a), wherein the former grips into the upper area (2b), radially tapers thereto at the exterior and forms an end side portion of an inner housing body (3.3), which is axially movable from the exterior of the infusion tank (2) in the longitudinal axis (L) thereof.

9. Infusion system according to claim 7,
**characterised in**
**that** the bore (3.8a) is designed as a convergent nozzle.

10. Infusion system according to claim 8 or 9,
**characterised in**
**that** the inner housing body (3.3) receives the second channel (3.3d) radially at the interior, which has a connection to the circumferential surroundings of the inner housing body (3.3) via plural admission openings (3.3f) arranged such as to be distributed over the circumference of the inner housing body (3.3).

11. Infusion system according to claim 10,
**characterised in**
**that** the second channel (3.3d) widens out like a diffuser at its exit point in the lower body portion (3.3c), and that the diffuser-like inner contour and a downward tapering surface area of the lower body portion (3.3c) form a bezel-like circumferential edge (3.3e) at their ends.

12. Infusion system according to any one of claims 8 to 11,
**characterised in**
**that** an infusion head (3) arranged on the head companion flange (2n) at the upper side is provided, which consists of a product housing (3.1) neighbouring the head companion flange (2n) and of a steam housing (3.2) following up the former, that the product housing (3.1) and the steam housing (3.2) are sealingly penetrated by the inner housing body (3.3) which is movable in the direction of the longitudinal axis (L), that a middle and the lower body portion (3.3a, 3.3c) of the inner housing body (3.3) form with the product housing (3.1) a ring-shaped product chamber (3.4) having the product inlet (3.6; 3.6a, 3.6b), and the middle (3a) and an upper body portion (3.3) as well as an adjustment bar (3.10), following up the latter, of the inner housing body (3.3) form with the steam housing (3.2) a ring-shaped steam chamber (3.5) having the first steam inlet (3.7.1).

13. Infusion system according to any one of the preceding claims,
**characterised in**
**that** a capturing device (4) is provided in the lower area (2c) of the infusion chamber (2a, 2b, 2c), that the former consists at least of a capturing funnel (4.1), whose conically downward tapering intake surface (4.1a) runs out into a downward opened flume (4.1b), and that the flume (4.1) is in alignment with an outlet channel (2f) arranged in an outlet pipe (2e), wherein the outlet pipe (2e) follows up the bottom (2d) at its upper end, and verges into the product outlet (2g) at its lower end.

14. Infusion system according to any one of the preceding claims,
**characterised in**
**that** at least the bottom (2d) is designed double-walled and a coolant room (2h) charged with coolant (K) is provided between the two walls.

15. Method for directly heating a liquid food product (P) in an infusion system (1) with an infusion chamber (2a, 2b, 2c), to which the food product (P) to be heated is supplied in the upper area (2b), and from which the heated food product (P') is discharged in the lower area (2c), wherein the food product (P) to be heated entering finely divided the infusion chamber (2a, 2b, 2c) permeates the infusion chamber (2a, 2b, 2c) as a downward flow, wherein steam is supplied to the upper area (2b) and wherein during the entire residence time of the food product (P) to be heated in the infusion chamber (2a, 2b, 2c), the former is in a heat exchange with the steam,
**characterised in**
• **that** a first steam (D1) is supplied to the upper area (2b) centrally from top to bottom as an inner free stream,
• **that** the food product (P) to be heated is supplied to the upper area (2b) from top to bottom as a ring-shaped middle free stream encompassing the inner free stream of the first steam (D1),
• and **that** a second steam (D2) is supplied to the upper area (2b) from top to bottom as a ring-shaped outer free stream which encompasses the middle free stream.

16. Method according to claim 15,
**characterised in**
**that** the food product (P) to be heated is formed in fine droplets (T) when it enters the upper area (2b).

17. Method according to any one of claims 15 or 16,
**characterised in**
**that** the heat input into the food product (P) to be heated is controlled via the quantitative proportion between the first and the second steam (D1, D2).

18. Method according to any one of claims 15 to 17,
**characterised in**
**that** the food product (P) to be heated is a dairy product.

19. Utilisation of an infusion system (1) according to one or more of the claims 1 to 14 in a process plant for the production of a dairy product.

20. Utilisation of an infusion system (1) according to claim 19, **characterised in that**
the dairy product is UHT milk or ESL milk, that the food product (P) to be heated, the milk to be heated, is withdrawn form the process plant, is conveyed to the infusion system (1) for milk heating, and that the heated food product (P'), the heated milk, is subsequently further processed in the process plant.

## Revendications

1. Système de perfusion (1) pour un produit alimentaire liquide (P) qu'on veut chauffer, qui comprend une chambre de perfusion (2a, 2b, 2c) limitée par un récepteur de perfusion (2) avec un fond (2d) contracturé vers le bas, la chambre de perfusion (2a, 2b, 2c) ayant une entrée de produit (3.6) pour le produit alimentaire liquide (P) qu'on veut chauffer dans sa partie supérieure (2b) et une sortie de produit (2g) pour le produit alimentaire (P') dans sa partie inférieure (2c), le système de perfusion (1) ayant une entrée de vapeur pour l'agent chauffant vapeur dans la partie supérieure (2b),
**caractérisé en ce que**
• l'entrée de vapeur est configurée en forme de deux entrées de vapeur (3.7.1, 3.7.2) séparées dans l'espace et du point de vue de la technique des fluides;
• la première entrée de vapeur (3.7.1) est reliée de manière perméable au fluide avec un deuxième canal (3.3d) et le deuxième canal (3.3d) débouche au centre de la partie supérieure (2b) de la chambre de perfusion (2a, 2b, 2c),
• l'entrée de produit (3.6; 3.6a, 3.6b) est reliée de manière perméable au fluide avec un premier canal (3.9) qui forme un anneau autour du deuxième canal (3.3d) et qui débouche du haut vers le bas également dans la partie supérieure (2b) de la chambre de perfusion (2a, 2b, 2c),
• et la deuxième entrée de vapeur (3.7.2; 3.7.2a, 3.7.2b) ) est reliée de manière perméable au fluide avec une pluralité d'orifices d'entrée (2n.1, 2n.2) disposés de manière circulaire qui entourent le premier canal (3.9) radialement vers l'extérieur et qui débouchent du haut vers le bas également dans la partie supérieure (2b) de la chambre de perfusion (2a, 2b, 2c).

2. Système de perfusion selon la revendication 1,
**caractérisé en ce que**
les orifices d'entrée (2n.1, 2n.2) sont configurés en forme d'un premier collier d'orifices d'entrée (2n.1) et d'un deuxième collier d'orifices d'entrée (2n.2), et que le premier collier d'orifices d'entrée (2n.1) entoure le deuxième collier d'orifices d'entrée (2n.2) radialement vers l'extérieur.

3. Système de perfusion selon la revendication 2,
**caractérisé en ce que**
le premier et le deuxième collier d'orifices d'entrée (2n.1, 2n.2) s'ouvrent directement dans la zone de paroi d'une ouverture de récipient supérieure (2s) à travers laquelle la partie supérieure (2b) s'ouvre vers le haut au premier canal (3.9) et au deuxième canal (3.3d).

4. Système de perfusion selon la revendication 2 ou 3,
**caractérisé en ce que**
le premier collier d'orifices d'entrée (2n.1) est orienté en parallèle à l'axe longitudinal (L) et le deuxième collier d'orifices d'entrée (2n.2) est orienté vers le bas et incliné par rapport à l'axe longitudinal (L).

5. Système de perfusion selon l'une quelconque des revendications précédentes, **caractérisé en ce que**
le premier canal (3.9) a un premier point de débouché (E1) dans la partie supérieure (2b), le deuxième canal (3.3d) a un deuxième point de débouché (E2) dans la partie supérieure (2b), et les orifices d'entrée (2n.1, 2n.2) ont un troisième point de débouché (E3), que le deuxième et le troisième point de débouché (E2, E3) sont disposés approximativement sur la même hauteur, et que le premier point de débouché (E1) est pourvu au-dessus du deuxième point de débouché (E2).

6. Système de perfusion selon l'une quelconque des revendications précédentes, **caractérisé en ce que**
le premier canal (3.9) a une section transversale de passage (A) variable dans son premier point de débouché (E1).

7. Système de perfusion selon la revendication 6,
**caractérisé en ce que**
la section transversale de passage (A) est variable continûment ou en étapes.

8. Système de perfusion selon la revendication 6 ou 7,
**caractérisé en ce que**
le section transversale de passage (A) a la forme d'une section transversale en fente annulaire qui est formée entre un alésage (3.8a) dans une contre-bride de tête (2n) qui limite la partie supérieure (2b) de la chambre de perfusion (2a, 2b, 2c), et une partie de corps inférieure (3.3c) qui pénètre l'alésage(3.8a), ce dernier prenant prise au dedans de la partie supérieure (2b), se contracture dans l'extérieur radialement vers cela et forme une partie au côté d'extrémité d'un corps intérieur de boîtier (3.3), qui se laisse déplacer hors du récepteur de perfusion (2) dans l'axe longitudinal (L) de cela.

9. Système de perfusion selon la revendication 7,
**caractérisé en ce que**
l'alésage (3.8a) est configuré comme une buse convergente.

10. Système de perfusion selon la revendication 8 ou 9,
**caractérisé en ce que**
le corps intérieur de boîtier (3.3) reçoit le deuxième canal (3.3d) radialement dans sa face interne, qui a une connexion aux environs circonférentiels du corps intérieur de boîtier (3.3) à travers plusieurs ouvertures d'admission (3.3f) distribuées autour de la circonférence du corps intérieur de boîtier (3.3).

11. Système de perfusion selon la revendication 10,
**caractérisé en ce que**
le deuxième canal (3.3d) s'élargit comme un diffuseur dans son point de sortie dans la partie de corps inférieure (3.3c), et que le contour intérieur en forme de diffuseur et une surface d'enveloppe de la partie de corps inférieure (3.3c) se contracturant vers dessous forment un bord circonférentiel (3.3e) en forme de lame dans leurs extrémités.

12. Système de perfusion selon l'une quelconque des revendications 8 to 11, **caractérisé en ce que**
une tête de perfusion (3) arrangée sur la contre-bride de tête (2n) au côté supérieur est pourvue, qui consiste d'un boîtier de produit (3.1) avoisinant à la contre-bride de tête (2n) et d'un boîtier de vapeur (3.2) qui se joint au ce dernier, que le boîtier de produit (3.1) et le boîtier de vapeur (3.2) sont pénétrés de façon étanche par le corps intérieur de boîtier (3.3) qui est mobile dans la direction de l'axe longitudinal axis (L), qu'une partie de corps centrale et la partie de corps inférieure (3.3a, 3.3c) du corps intérieur de boîtier (3.3) forment avec le boîtier de produit (3.1) une chambre de produit annulaire (3.4) qui a l'entrée de produit (3.6; 3.6a, 3.6b), et que la partie de corps centrale (3a) et une partie de corps centrale supérieure (3.3) aussi bien qu'une tige de réglage (3.10) du corps intérieur de boîtier (3.3) qui se joint à ceci, forment avec le boîtier de vapeur (3.2) une chambre de vapeur (3.5) annulaire qui a la première entrée de vapeur (3.7.1).

13. Système de perfusion selon l'une quelconque des revendications précédentes, **caractérisé en ce que**
un dispositif de saisie (4) est pourvu dans la partie inférieure (2c) de la chambre de perfusion (2a, 2b, 2c), que cela consiste d'au moins un entonnoir de saisie (4.1), dont l'enveloppe de rodage (4.1a) qui se contracture vers le bas de façon conique débouche dans un canal d'écoulement (4.1b) ouvert vers le bas, et que le canal d'écoulement (4.1b) est en alignement avec un canal de sortie (2f) arrangé dans un tuyau de sortie (2e), le tuyau de sortie (2e) joignant le fond (2d) dans son extrémité supérieure et passant vers la sortie de produit (2g) dans son extrémité inférieure.

14. Système de perfusion selon l'une quelconque des revendications précédentes, **caractérisé en ce que**
au moins le fond (2d) est fait avec deux parois et une chambre de réfrigérant (2h) chargé avec du réfrigérant (K) est pourvu entre les deux parois.

15. Procédé destiné au chauffage direct d'un produit alimentaire (P) liquide dans un système de perfusion (1) avec une chambre de perfusion (2a, 2b, 2c), à laquelle le produit alimentaire (P) qu'on veut chauffer est envoyé dans la partie supérieure (2b), et à partir de laquelle le produit alimentaire (P') chauffé est déchargé dans la partie inférieure (2c), le produit alimentaire (P) qu'on veut chauffer entrant dans la chambre de perfusion (2a, 2b, 2c) en un état finement reparti entremêle la chambre de perfusion (2a, 2b, 2c) comme un flux de chute vertical, de la vapeur étant alimenté à la partie supérieure (2b), et pendant tout le temps de séjour du produit alimentaire (P) qu'on veut chauffer dans la chambre de perfusion (2a, 2b, 2c), ceci est dans un échange de chaleur avec la vapeur,
**caractérisé en ce que**
• une première vapeur (D1) est conduite à la partie supérieure (2b), centralement du haut vers le bas et comme un jet libre intérieur,
• le produit alimentaire (P) qu'on veut chauffer est conduit à la partie supérieure (2b) du haut vers le bas et comme un jet libre intérieur annulaire, enfermant le jet libre intérieur de la première vapeur (D1),
• et une deuxième vapeur (D2) est conduite à la partie supérieure (2b) du haut vers le bas et comme un jet libre intérieur annulaire enfermant le jet libre central.

16. Procédé selon la revendication15,
**caractérisé en ce que**
le produit alimentaire (P) qu'on veut chauffer est formé comme gouttelettes fines (T) quand il entre dans la partie supérieure (2b).

17. Procédé selon l'une quelconque des revendications 15 ou 16,
**caractérisé en ce que**
l'apport de chaleur dans le produit alimentaire (P) qu'on veut chauffer est contrôlé par le rapport quantitatif entre la première et la deuxième vapeur (D1, D2).

18. Procédé selon l'une quelconque des revendications 15 to 17,
**caractérisé en ce que**
le produit alimentaire (P) qu'on veut chauffer est un produit laitier.

19. Utilisation d'un système de perfusion (1) selon une ou plusieurs des revendications 1 à 14 dans un appareil de traitement pour la production d'un produit laitier.

20. Utilisation d'un système de perfusion (1) selon la revendication 19, **caractérisé en ce que**
le produit laitier est du lait UHT ou ESL, que le produit alimentaire (P) qu'on veut chauffer, le lait qu'on veut chauffer, est déduit de l'appareil de traitement, conduit au système de perfusion (1) pour chauffer le lait, et que le produit alimentaire chauffé (P'), le lait chauffé, est ensuite élaboré dans l'appareil de traitement.
